Europäisches Patentamt

European Patent Office

Office européen des brevets

(11) Veröffentlichungsnummer: **0 022 205**
**B1**

## EUROPÄISCHE PATENTSCHRIFT

(45) Veröffentlichungstag der Patentschrift:
**20.10.82**

(21) Anmeldenummer: **80103477.8**

(22) Anmeldetag: **21.06.80**

(51) Int. Cl.³: **H 04 N 5/44,** H 04 N 5/50

(54) Schaltungsanordnung zum Einblenden von analogen und digitalen Signalen auf dem Bildschirm eines Fernsehempfängers.

(30) Priorität: **07.07.79 DE 2927591**

(43) Veröffentlichungstag der Anmeldung:
**14.01.81 Patentblatt 81/2**

(45) Bekanntmachung des Hinweises auf die Patenterteilung:
**20.10.82 Patentblatt 82/42**

(84) Benannte Vertragsstaaten:
**CH FR IT LI NL**

(56) Entgegenhaltungen:
**DE-A-2 432 600**
**DE-A-2 707 579**
**DE-B-1 226 144**
**DE-B-1 292 174**
**DE-B-2 222 150**
**US-A-3 786 481**

(73) Patentinhaber: **SABA GmbH,**
**Hermann-Schwer-Strasse 3, D-7730 Villingen (DE)**

(72) Erfinder: **Arendt, Bodo, Ing. grad.,**
**Alban-Dold-Strasse 30, D-7730 Villingen (DE)**
Erfinder: **Kurz, Arthur, Ing. grad., Jurastrasse 5,**
**D-7730 Pfaffenweiler (DE)**

ACTORUM AG

## Schaltungsanordnung zum Einblenden von analogen und digitalen Signalen auf dem Bildschirm eines Fernsehempfängers

Die Erfindung betrifft eine elektronische Schaltungsanordnung, mit der es möglich ist, auf einem Bildschirm eines Fernsehempfängers analoge bzw. digitale Signale einzublenden. Dieses ist insbesondere bei fernbedienten Fernsehempfängern vorteilhaft, um eine Rückmeldung darüber zu bekommen, welcher Kanal gerade empfangen wird bzw. auf welche Werte gerade die analogen Funktionen wie z.B. für Lautstärke, Helligkeit und Farbsättigung oder für die Abstimmspannung eingestellt sind, da man diese Einstellung wegen der Fernbedienung und nicht sichtbarer Bedienungselemente direkt ablesen kann. Hierzu wurden elektronische Schaltungen in diskreter Bauart und auch schon in integrierter Schaltungstechnik eingesetzt, mit deren Hilfe die Rückmeldung über eingeblendete digitale und balkenförmige Symbole auf dem Bildschirm sichtbar gemacht wird. So wird in der DE-OS 24 32 600 eine Anordnung zur Anzeige verschiedener linearer oder digitaler Signalgrössen auf dem Bildschirm eines Farbfernsehempfängers beschrieben, die dadurch gekennzeichnet ist, dass der aus dem Bedienungsvorgang resultierende digitale oder analoge Stellwert auf dem Bildschirm einen festgelegten Teil der Bildfläche leuchtdichtmässig in variabler Grösse so ausfüllt, dass die in vertikaler oder horizontaler Richtung aussteuerbare Flächengrösse als ein Mass für den gewählten Einstellwert angesehen werden kann.

Bei der in der genannten DE-OS beschriebenen Anordnung ist es auch möglich, gleichzeitig mehrere Analogsignale übereinander auf dem Bildschirm zur Anzeige zu bringen.

Auch ist ein Verfahren für die proportionale Anzeige der Balken auf dem Bildschirm eines Fernsehempfängers in horizontaler Richtung bekannt, das dadurch gekennzeichnet ist, dass im Abstand von diesem Bildschirmrand eine linke Kante des Balkenfeldes im Abstand von dem linken Bildschirmrand als Bezugskante für den Wert Null des einzustellenden Wertes und eine rechte Kante des Balkenfeldes im Abstand von dem rechten Bildschirmrand als Bezugskante für den Höchstwert des einzustellenden Wertes sichtbar gemacht wird, wobei gleichzeitig mit dem Anzeigebalken ein mit dem Anfang und mit dem Ende mit dem Null- und Höchstwert des einzustellenden Wertes übereinstimmender Bezugsbalken als Unterfeld-, Nebenfeld- oder Schiebefeldbalken sichtbar gemacht wird. (DE-AS 27 07 579). Hierbei sollte die Aufgabe gelöst werden, eine eindeutige Anzeige über den Einstellwert dadurch zu erhalten, dass durch Einführung der Begrenzung der Balken am linken und rechten Bildrand der untere und obere Grenzwert und in bezug zu diesen der Einstellwert erkennbar ist.

Derartige Einblendschaltungen werden mit Hilfe von grossintegrierten Bauteilen verwirklicht, was gegenüber der Bauweise in diskreter Schaltungstechnik eine wesentliche Kostensenkung zur Folge hatte. Nachteilig hierbei ist die Einbusse an Flexibilität derartiger Schaltungen. Mit diesen Konzepten ist es nicht möglich, zusätzliche Einblendungen als mit diesen vorgesehen vorzunehmen.

Der Erfindung liegt deshalb die Aufgabe zugrunde, eine bekannte Schaltung zur Einblendung von Symbolen auf dem Bildschirm eines Fernsehempfängers mit Hilfe von nur wenigen zusätzlichen Bauteilen flexibler zu machen, indem zusätzliche Einblendungen ermöglicht werden. Dies ist z.B. bei tragbaren Fernsehempfängern wünschenswert, wenn neben der Einblendung der oben beschriebenen Analogfunktion zusätzlich z.B. noch die Feldstärke des Empfangssignals oder der Ladezustand einer eingebauten Batterie angezeigt werden soll. Hierbei soll eine vorhandene Baugruppe in Form der Einblendschaltung in integrierter Schaltungstechnik mehrfach ausgenutzt werden. Ausser der zweiten Anzeige soll erreicht werden, dass mit einfachen Mitteln nicht erwünschte Teile der im oberen Bildteil enthaltenen Informationen bei der zweiten Einblendung unterdrückt werden. Bei engen Abständen der Information in vertikaler Richtung können leicht fehlerhafte Abschneidungen erfolgen. Es müsste deshalb ein Zeilenzähler eingesetzt werden, der mit dem Hauptvertikalimpuls getriggert sein muss. Da aber der Schaltungsaufwand möglichst gering sein sollte, wird zur Erzeugung des Ausblendsignals hierzu die Information dem Helligkeitskanal entnommen.

Die der vorliegenden Erfindung zugrunde liegende Aufgabe wird bei einer Schaltungsanordnung zum Einblenden von analogen Signalen in Form von diesen proportionalen Balken zur Anzeige der eingestellten Lautstärke, Helligkeit, Farbsättigung und der Abstimmspannung sowie zum Einblenden von digitalen Signalen in Form von den Kanalzahlen entsprechenden Ziffernsymbolen auf dem Bildschirm eines Fernsehempfängers, welcher zur exakten Positionierung der Symbole Vertikalsynchron- und Horizontalsynchronimpulse zugeführt werden, wobei durch diese Impulse über monostabile Kippschaltungen eine integrierte Schaltung zum Erzeugen der Einblendsignale angesteuert wird, welche Zeilenzähler aufweist, die Torschaltungen zur Wiedergabe der Zeichen öffnen, dadurch gelöst, dass im Zeitraum zwischen zwei Vertikalsynchronimpulsen ein Zusatzimpuls erzeugt wird, der ebenfalls an den Vertikalsynchronimpulseingang der integrierten Schaltung zum Erzeugen der Einblendsignale angelegt wird, dass mit jedem dem Vertikalsynchronimpulseingang zugeführten Impuls der Analogspannungseingang der integrierten Schaltung zum Erzeugen der Einblendsignale auf das jeweils andere von zwei Analogsignalen umgeschaltet wird, und dass das aus der integrierten Schaltung zum Erzeugen der Einblendsignale entnommene Helligkeitssignal über eine Detektorschaltung ausgekoppelt an eine weitere monostabile Kippschaltung angeschlossen ist, von deren negiertem Ausgang ein Austastsignal an den Freigabeeingang der integrierten Schaltung zum Erzeugen der Einblendsignale gelegt ist, um in dem zweiten Bildteil unerwünschte Teile der in dem ersten Bildteil enthaltenen, wiederverwendeten Informationen auszublenden.

Nachstehend soll die Erfindung mit Hilfe der Zeichnung an einem Ausführungsbeispiel näher erläutert werden.

Fig. 1 zeigt ein Schirmbild mit bekannter Einblendung;

Fig. 2 zeigt ein Schirmbild wie es durch die beschriebene Schaltungsanordnung erzeugt wird;

Fig. 3 zeigt ein Blockschaltbild mit der automatischen Umschaltung für weitere Signale;

Fig. 4 zeigt Signalverläufe, die sich an den verschiedenen Schaltungspunkten der Schaltung nach Fig. 3 ergeben.

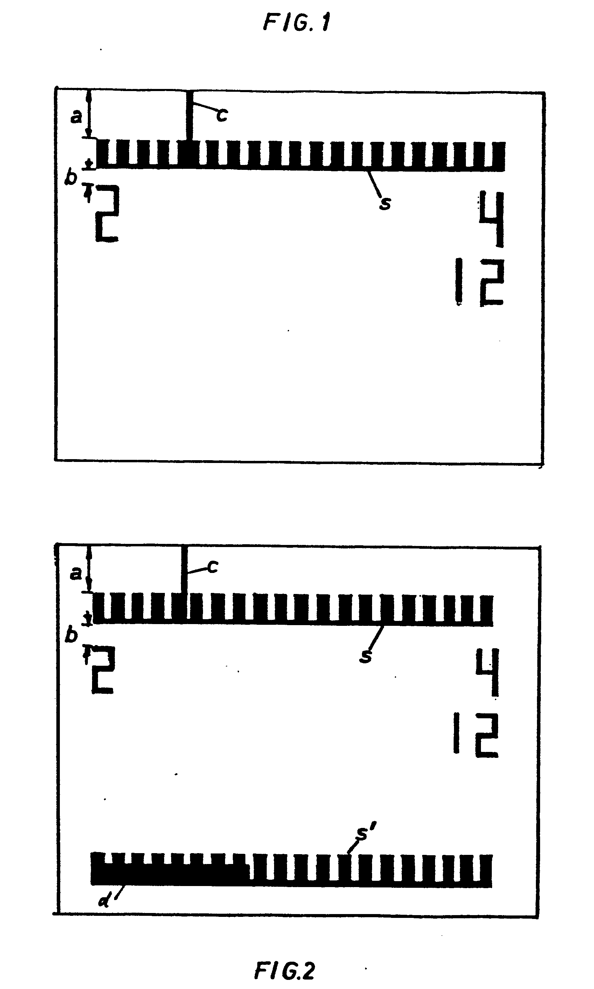

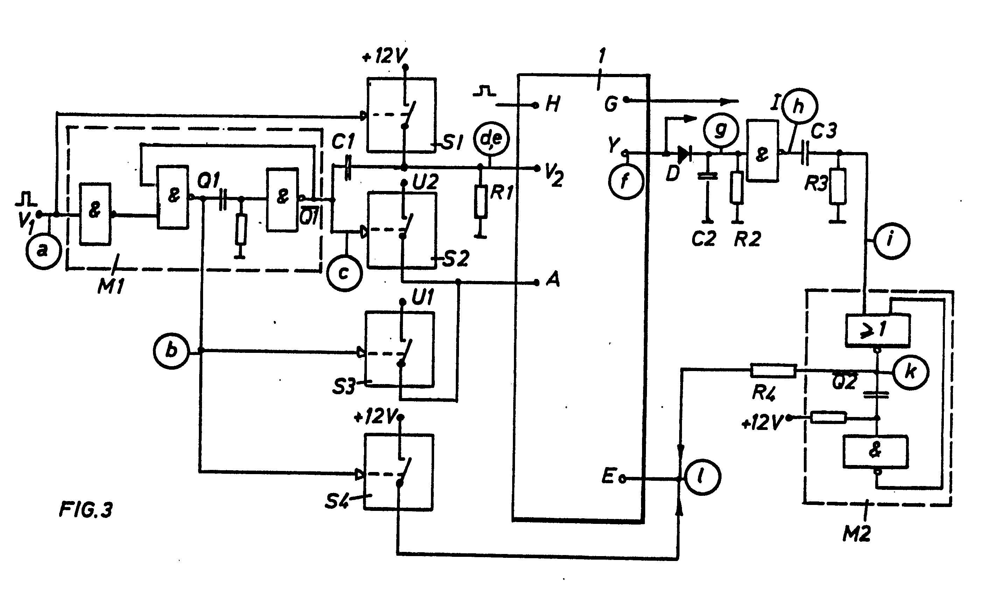

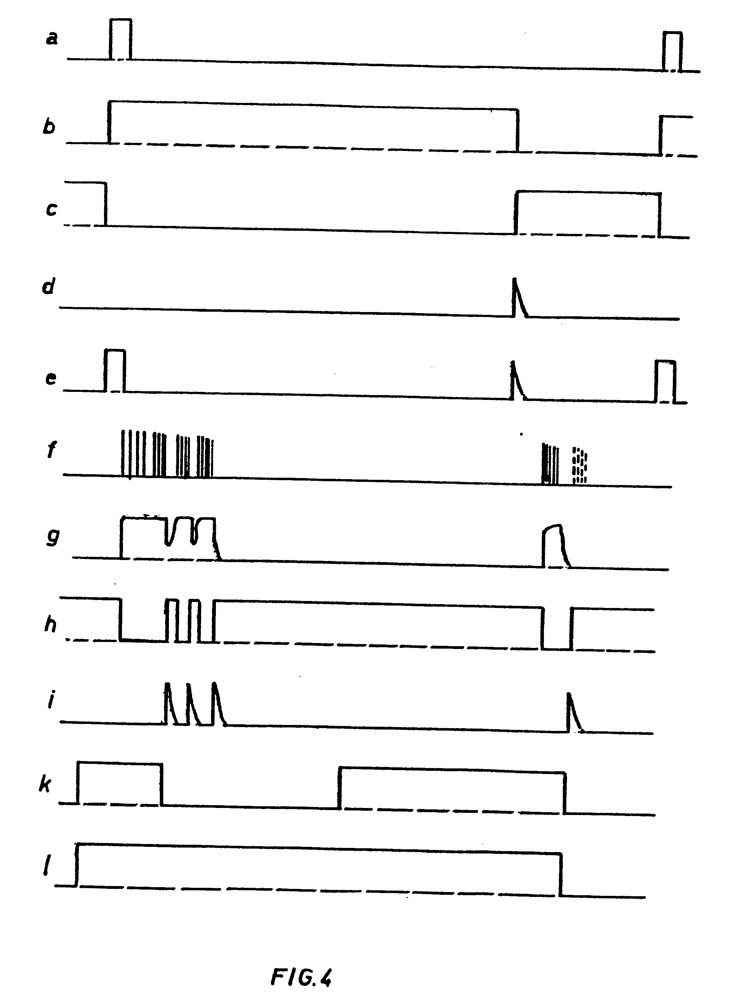

In Fig. 1 ist dargestellt, wie mit Hilfe der Einblendung z.B. der Abstimmspannung eine Information darüber gegeben wird, auf welchem Sender der Empfänger gerade abgestimmt ist. Hierzu wird von einer dazu vorgesehenen Schaltung ein Strichmuster erzeugt, welches z.B. 24 Zeilen im Abstand a vom oberen Bildrand entfernt für die Dauer von 14 Zeilen geschrieben wird. Im Abstand b von 6 Zeilen erscheinen Anfangs- und Endnummern des eingestleten Empfangsbereichs und darunter die Nummer des aufgerufenen Speicherplatzes. Ein Balken c überstreicht die Skala s entsprechend der eingestellten Abstimmspannung. Gemäss der Aufgabenstellung vorliegender Erfindung soll eine weitere Information auf der unteren Bildhälfte eingeblendet werden. Hierzu sollen Teile der Information der oberen Bildhälfte wiederholt werden, wie z.B. die Skala s. Die anderen Informationen sollen aber ausgeblendet werden, wie z.B. die Ziffern. Auf der unteren Skala s' soll z.B. die empfangene Feldstärke an dem horizontalen Balken d ablesbar sein, so dass es bei Verwendung von tragbaren Fernsehempfängern möglich ist, die Antenne so auszurichten, dass die Länge des horizontalen Balkens d ein Maximum wird. In Fig. 2 ist das entsprechende Schirmbild wiedergegeben, wie es mit der erfindungsgemässen Schaltungsanordnung erzeugt werden kann, die nachfolgend mit Hilfe von Fig. 3 erklärt wird, wobei die an den entsprechenden Punkten der Schaltung entstehenden Signale in Fig. 4 dargestellt sind.

Die bekannte Einblendelektronik besteht aus einer integrierten Schaltung 1, von deren Anschlüssen G, Y die Einblendsignale an die Videoendstufen gelangen. Die Schaltung 1 besitzt einen Freigabeeingang E, so dass je nach an diesem anliegendem Potential die Einblendschaltung aktiviert wird oder nicht. Zur Synchronisation besitzt die Schaltung noch Eingänge H und V2, an welchen horizontalfrequente und vertikalfrequente Impulse anliegen. In der Schaltung 1 wird mit Hilfe dieser Impulse durch Zählschaltungen der Ort der Einblendung bestimmt. Ausserdem besitzt die Schaltung 1 einen Eingang A, an welchem die einzublendenden Analogsignale anliegen. An dem Ausgang G entstehen die z.B. grünfarbigen Signale für den Anzeigebalken und die Ziffern, während an dem Ausgang Y die Signale für die auf dem Bildschirm schwarz wiedergegebenen Striche der Skala liegen. Ausserdem werden diejenigen Stellen des Bildes, an welchen die Ziffern eingeblendet werden, von Signalen über den Y-Anschluss der Schaltung 1 dunkelgesteuert, damit die Wiedergabe der Ziffern unabhängig vom Bildinhalt wird.

Dem Eingang V1 der Schaltung wird der Vertikalsynchronimpuls zugeführt (Fig. 4a), der über einen elektronischen Schalter S1 dem Eingang V2 der integrierten Schaltung 1 einen ersten Impuls zuleitet. Der Vertikalimpuls gelangt ausserdem über eine monostabile Kippstufe M1 mit den Ausgängen Q1 und $\overline{Q1}$ (Fig. 4b, c). An das am invertierten Ausgang $\overline{Q1}$ beim Zurückschalten der monostabilen Kippstufe M1 entstehende Signal (Fig. 4c) wird über ein Differenzierglied C1, R1 an den Eingang V2 geschaltet (Fig. 4d). Hierdurch erhält dieser gegenüber dem ersten einen zweiten verzögerten Impuls, wie in Fig. 4e gezeigt. Die Einblendschaltung soll z.B. in der oberen Bildhälfte die Analogspannung U1 in Form einer Abstimmspannung und in der unteren Bildhälfte die Analogspannung U2 in Form eines für die Empfangsfeldstärke charakteristischen Signals zur Anzeige bringen. Hierzu müssen die beiden Analogspannungen U1 und U2 umgeschaltet an den Eingang A der Schaltung 1 gelangen. Das geschieht mit Hilfe von elektronischen Schaltern S2 und S3, die von den Ausgängen Q1 und $\overline{Q1}$ der monostabilen Kippstufe M1 gesteuert werden. Vom Ausgang Q1 wird ausserdem über den elektronischen Schalter S4 der Freigabeeingang E mit einem Potential nach Fig. 4l beaufschlagt. Damit die Schaltung 1 nach dem zweiten Impuls nach Fig. 4e im unteren Bildteil die Ziffernsymbole des oberen Bildteils nicht wiederholt, wird aus dem Helligkeitssignal am Ausgang Y eine Spannung abgeleitet. Der in Fig. 4f gezeigte Spannungsverlauf zeigt die ersten Zeilen des Anzeigebalkens c, darauf folgen die dichter liegenden Impulse der Skala s und nach einer Lücke einiger Zeilen erscheinen die Signale für die Ziffern am Y-Ausgang. Dieses Signalgemisch wird mit Hilfe des Detektors D gleichgerichtet und es entsteht an dem Glättungsglied R2, C2 ein Spannungsverlauf nach Fig. 4g, der hinter dem Inverter I einen Spannungsverlauf nach Fig. 4h erzeugt, welcher über ein Differenzierglied C3, R3 eine monostabile Kippschaltung M2 mit Impulsen nach Fig. 4i ansteuert. Der erste dieser Impulse triggert die monostabile Kippstufe M2, an deren invertiertem Ausgang $\overline{Q2}$ eine Spannung abgenommen wird, die über einen Widerstand R4 an den Freigabeeingang E der Schaltung 1 gelangt. Sobald die Signale der durch den zweiten Vertikalimpuls ausgelösten wiederholten Skala am Ausgang Y erscheinen, wird der Freigabeeingang bei Eintreffen der weiteren Symbole sofort gesperrt, so dass die Einblendschaltung inaktiv wird. Auf diese Weise werden die unerwünschten Zeichen unterdrückt.

**Patentansprüche**

1. Schaltungsanordnung zum Einblenden von analogen Signalen in Form von diesen proportionalen Balken (c, d) zur Anzeige der eingestellten Lautstärke, Helligkeit, Farbsättigung und der Abstimmspannung sowie zum Einblenden von digitalen Signalen in Form von den Kanalzahlen entsprechenden Ziffernsymbolen auf dem Bildschirm eines Fernsehempfängers, welcher zur exakten Positionierung der Symbole Vertikalsynchron- und Horizontalsynchronimpulse zugeführt werden, wobei durch diese Impulse über monostabile Kippschaltungen (M1, M2) eine integrierte Schaltung (1) zum Erzeugen der Einblendsignale angesteuert wird, welche Zeilenzähler aufweist, die Torschaltungen zur Wiedergabe der Zeichen öffnen, dadurch gekennzeichnet, dass im Zeitraum zwischen zwei Vertikalsynchronimpulsen (a) ein Zusatzimpuls (d) erzeugt wird, der ebenfalls an den Vertikalsynchroneingang (V2) der integrierten Schaltung (1) zur Erzeugung der Einblendsignale angelegt wird, dass mit jedem dem Vertikalsynchronimpulseingang (V2) zugeführten Impuls (e) der Analogspannungseingang (A) der integrierten Schaltung (1) zum Erzeugen der Einblendsignale auf das jeweils andere von zwei Analogsignalen (U1, U2) umgeschaltet wird, und dass das aus der integrierten Schaltung (1) zur Erzeugung der Einblendsignale entnommene Helligkeitssignal (Y) über eine Detektorschaltung (D, C2, R2) ausgekoppelt an eine weitere monostabile Kippschaltung (M2) angeschlossen ist, von deren negierten Ausgang ($\overline{Q2}$) ein Austastsignal (K) an den Freigabeeingang (E) der integrierten Schaltung (1) zum Erzeugen der Einblendsignale gelegt ist, um in dem zweiten Bildteil unerwünschte Teile der in dem ersten Bildteil enthaltenen, wiederverwendeten Informationen auszublenden.

2. Schaltungsanordnung nach Anspruch 1, dadurch gekennzeichnet, dass eine der Analogspannungen (U2) aus der Regelspannung für die automatische Verstärkungsregelung des Fernsehempfängers erzeugt wird.

3. Schaltungsanordnung nach den Ansprüchen 1 und 2, dadurch gekennzeichnet, dass die im zweiten Bildteil wiedergegebene Analogspannung (U2) der Empfangsfeldstärke des eingestellten Senders proportional ist und das auf dem Bildschirm wiedergegebene Balkensignal zum optimalen Ausrichten der Empfangsantenne herangezogen wird.

**Claims**

1. Circuit arrangement for the fading-in of analog signals in the form of bars proportional to these for the purpose of indicating the adjusted volume, brightness, colour saturation, and tuning voltage in the form of numeric symbols corresponding to the channel numbers, to which are applied vertical sync and horizontal sync pulses for the exact positioning of the symbols, whereby these pulses trigger time meters through monostable flipflops, opening gate circuits for the reproduction of the signs, characterized by developing, during the period between two vertical sync pulses (a) an additional pulse (d) which is also applied to the vertical sync input (V2) if the fade-in circuit (1); by switching over, with any pulse (e) applied to the vertical sync pulse input (V2), the analog voltage input A of the fade-in circuit (1) to the respective other of two analog signals (U1, U2); and by the fact that the brightness signal (Y) taken from the fade-in circuit (1) is – coupled out – connected through a detector circuit (D, C2, R2) to another monostable flipflop (M2), from whose Q-output (Q2), a blanking signal (k) is applied to the release input (E) of the fade-in circuit (1) in order to fade out in one part of the picture, portions of the information included in the other part of the picture.

2. Circuit arrangement according to claim 1, characterized by developing one of the analog voltages (U2) from the control voltage for the automatic gain control of the television receiver.

3. Circuit arrangement according to claim 1 and 2, characterized in that the analog voltage (U2) reproduced in the second picture portion is proportional to the incoming-signal level of the adjusted station and that the bar-signal reproduced on the screen is used for the optimal alignment of the receiver antenna.

**Revendications**

1. Un montage destiné à insérer en fondu des signaux analogiques sous forme de barres proportionnelles destinés à indiquer le volume sonore, la luminosité, la saturation de couleur et la tension d'accord, ainsi qu'à faire apparaître en fondu des signaux digitaux sous forme de chiffres correspondants aux numéros des canaux auquel sont appliquées des impulsations de synchronisation verticale et horizontale pour le positionnement exacte des symboles; ces impulsions et celles issues des flipflop activent des compteurs horaires qui ouvrent des portes assurant la reproduction des signes, caractérisé en ce qu'une impulsion supplémentaire (d) produite entre deux impulsions de synchronisation verticale (a), est appliquée également à l'entrée de synchronisation verticale (V2) du circuit de fondu (1); et qu'avec chaque impulsion (e) appliquée à l'entrée de synchronisation verticale (V2) l'entrée de tension analogique (A) du circuit de fondu (1) est commutée respectivement à l'un ou l'autre des deux signaux analogiques (U1, U2); et que le signal de luminance (Y) pris du circuit de fondu (1) est relié, découplé, par un détecteur (D, C2, R2), à un autre multivibrateur monostable (M2), de la sortie (Q2) duquel, un signal de suppression (K) est appliqué à l'entrée de relâchement (E) du circuit de fondu (1), pour supprimer, dans l'une des parties d'image, une part des informations contenues dans l'autre partie d'image.

2. Montage selon la revendication no 1, caractérisé en ce qu'une des tensions analogiques (U₂) est obtenue par une tension de sortie du circuit de contrôle automatique de gain du téléviseur.

3. Montage selon la revendication 1 ou 2 caractérisé par le fait, que la tension analogue (U₂) représenté à la deuxième partie de l'écran est proportionale à l'intensité de champ reçue et que le signal de barre sur l'écran est utilisé pour l'orientation optimale de l'antenne.

0 022.205

## FIG. 1

## FIG.2

FIG.3

FIG. 4